# EUROPEAN PATENT SPECIFICATION

(11) **EP 4 571 658 B1**
(45) Date of publication and mention of the grant of the patent: **09.12.2026**
(21) Application number: 23851887.2
(22) Date of filing: 09.08.2023
(51) Int. Cl.: G06T 7/521, G06T 7/593

(54) **THREE-DIMENSIONAL RECONSTRUCTION METHOD AND SYSTEM**
VERFAHREN UND SYSTEM ZUR DREIDIMENSIONALEN REKONSTRUKTION
PROCÉDÉ ET SYSTÈME DE RECONSTRUCTION TRIDIMENSIONNELLE

(30) Priority: 10.08.2022 CN 202210956349
(43) Date of publication of application: 18.06.2025
(73) Proprietor: Shining 3D Tech Co., Ltd., Hangzhou, Zhejiang 311258 (CN)
(72) Inventor: CHEN, Han, Hangzhou, Zhejiang 311258 (CN); ZHAO, Xiaobo, Hangzhou, Zhejiang 311258 (CN); ZHANG, Jian, Hangzhou, Zhejiang 311258 (CN); HUANG, Leijie, Hangzhou, Zhejiang 311258 (CN); MA, Chao, Hangzhou, Zhejiang 311258 (CN)
(74) Representative: Dehns Germany Partnerschaft mbB
(86) International application number: PCT/CN2023/112043
(87) International publication number: WO 2024/032666

(56) References cited:
- CN-A- 108 269 279
- CN-A- 110 264 573
- CN-A- 113 310 432
- CN-A- 115 345 994
- JP-B2- 6 583 674
- US-A1- 2013 307 932
- MINORU MARUYAMA ET AL: "RANGE SENSING BY PROJECTING MULTIPLE SLITS WITH RANDOM CUTS", IEEE TRANSACTIONS ON PATTERN ANALYSIS AND MACHINE INTELLIGENCE, IEEE COMPUTER SOCIETY, USA, vol. 15, no. 6, 1 June 1993 (1993-06-01), pages 647 - 651, XP000369964, ISSN: 0162-8828, DOI: 10.1109/34.216735

## Description

### Cross-Reference to Related Application

The present application claims priority of the Chinese patent application No. 202210956349.7, filed on August 10, 2022 to China National Intellectual Property Administration and entitled " Method, Apparatus and System for Three-dimensional Reconstruction".

### Technical Field

The present disclosure relates to the field of three-dimensional reconstruction, in particular to a method, apparatus and system for three-dimensional reconstruction.

### Background

Structured light three-dimensional reconstruction technology is a three-dimensional reconstruction technology which projects an optical coding pattern onto a surface of a measured object and recovers three-dimensional data of the surface of the object through an acquired deformation pattern. This technology has the characteristics of high efficiency, interference resistance and the like, and is widely applied in various three-dimensional reconstruction scenes. The core problem in the structured light three-dimensional reconstruction technology is the matching of homonymous pixel points. Different matching strategies depend on different coding methods. Structured light technology can be divided into temporal coding and spatial coding according to different coding methods of projected patterns. The temporal coding needs to project multiple frames of patterns in a measured scene in time sequence, and usually requires the measured object and a projector to remain relatively stationary. As a result, high frame rate scanning cannot be realized, and applicable scenes are limited to a certain extent. Consequently, the temporal coding is mostly used in static scanning scenes. The spatial coding usually only needs to project a pattern in a measured scene to complete three-dimensional reconstruction. At present, in related art, one method is to perform decoding through a circular code element coding method by using the relative displacement relationship between neighborhood code elements. Another method is to acquire three-dimensional data by matching between image blocks. In the former method, the code element coding capacity is relatively small and only sparse code element points can be reconstructed, resulting in less data of a single frame and low scanning efficiency; and in the latter method, using the image blocks for matching leads to relatively low accuracy.

In view of the above problems, no effective solution has been proposed at present.

Relevant prior art is known from XP000369964 and JP 6583674 B2.

### SUMMARY

The embodiments of the present inventionprovide a method, apparatus and system for three-dimensional reconstruction, so as to at least solve the technical problem of low scanning efficiency caused by small code element coding capacity.

According to one aspect of the embodiments of the present invention, a computer-implemented method for three-dimensional reconstruction is provided, including: projecting a first image onto a surface of a measured object to obtain a second image, where the first image includes a plurality of code elements which are randomly distributed in a preset direction, and the code elements are line segment stripes, the second image is an image acquired by the image acquisition device after the first image is projected onto the surface of the measured object; determining, in the first image, a plurality of candidate code elements corresponding to any code element in the second image, and determining, from the plurality of candidate code elements, a target code element corresponding to the any code element to complete matching between the code elements in the first image and the code elements in the second image, where feature points of the target code element and feature points of the candidate code elements are on a same epipolar line; and determining three-dimensional coordinates of the code elements in the second image based on a matching relationship between the code elements in the first image and the second image and predetermined three-dimensional coordinates of the code elements in the first image, and determining three-dimensional coordinates of the measured object based on the three-dimensional coordinates of the code elements in the first image and the second image to complete three-dimensional reconstruction of the measured object; the method further comprising: selecting at least one code element from a preset code element set, wherein the code element in the preset code element set at least comprises a line segment with a preset length and two endpoints corresponding to the line segment; andrandomly distributing the plurality of the at least one code element in the preset direction and at a preset distance to form the first image.

In some embodiments of the present disclosure, the determining, in the first image, a plurality of candidate code elements corresponding to any code element in the second image includes: determining a first neighborhood code element set of the any code element in the second image and a plurality of second neighborhood code element sets of the plurality of candidate code elements; determining the number of matching neighborhood code elements in the plurality of second neighborhood code element sets with neighborhood code elements in the first neighborhood code element set, and determining a second neighborhood code element set with the largest matching number in the plurality of second neighborhood code element sets as a target second neighborhood code element set; and determining a candidate code element corresponding to the target second neighborhood code element set as the target code element.

In some embodiments of the present disclosure, the determining a first neighborhood code element set of the any code element in the second image includes: determining a plurality of feature points of the any code element; and determining code elements with the nearest distances on a left side and a right side of the epipolar line where the plurality of feature points are located as neighborhood code elements of the any code element, and forming the neighborhood code elements of the any code element into the first neighborhood code element set..

In some embodiments of the present disclosure, the determining the number of matching neighborhood code elements in the plurality of second neighborhood code element sets with neighborhood code elements in the first neighborhood code element set includes: numbering all the code elements in the first image and the second image according to pixel coordinates of the feature points of the code elements; comparing the neighborhood code elements in the first neighborhood code element set with neighborhood code elements in corresponding areas in the plurality of second neighborhood code element sets sequentially, and under a condition that code element numbers are the same, determining the neighborhood code elements to be matched with the neighborhood code elements in the corresponding areas; and determining the number of matching each of the plurality of second neighborhood code element sets with the neighborhood code elements in the first neighborhood code element set.

In some embodiments of the present disclosure, prior to determining, in the first image, a plurality of candidate code elements corresponding to any code element in the second image, the method further includes: adjusting the first image and the second image to a plane in a same direction.

In some embodiments of the present disclosure, after determining a target code element set corresponding to each code element in the second image, the method further includes: determining central lines of the code elements in the first image and the second image; and determining a mapping relationship between the central lines of the code elements in the first image and the second image according to a mapping relationship among the target code elements corresponding to all the code elements in the second image.

According to another aspect of the embodiments of the present disclosure, a system according to claim 10 is provided.

According to a still another aspect of the embodiments of the present disclosure, a non-transitory storage medium is further provided, including a stored program, where the program, when being run, controls a device in which the non-transitory storage medium is located to perform the above method for three-dimensional reconstruction.

According to a still another aspect of the embodiments of the present disclosure, an electronic device is further provided, including: a memory and a processor, the processor being configured to run a program, where when the program is run, the method for above three-dimensional reconstruction is performed.

In the embodiments of the present disclosure, by adopting a method: projecting a first image onto a surface of a measured object to obtain a second image, where the first image includes a plurality of code elements which are randomly distributed in a preset direction, and the code elements are line segment stripes; determining, in the first image, a plurality of candidate code elements corresponding to any code element in the second image, and determining, from the plurality of candidate code elements, a target code element corresponding to the any code element to complete matching between the code elements in the first image and the code elements in the second image, where feature points of the target code element and feature points of the candidate code elements are on a same epipolar line; and determining three-dimensional coordinates of the code elements in the second image based on a matching relationship between the code elements in the first image and the second image and predetermined three-dimensional coordinates of the code elements in the first image, and determining three-dimensional coordinates of the measured object based on the three-dimensional coordinates of the code elements in the first image and the second image to complete three-dimensional reconstruction of the measured object, through a line segment stripe coding mode, a purpose of increasing the code element coding capacity is achieved, thereby realizing the technical effect of improving the scanning efficiency, and further solving the technical problem of low scanning efficiency caused by small code element coding capacity.

### Brief Description of the Drawings

The accompanying drawings, which are set forth herein to provide a further understanding of the present disclosure, constitute a part of the present disclosure, and the illustrative embodiments and descriptions of the present disclosure are for the purpose of illustrating the present disclosure, and are not intended to unduly limit the present disclosure. In the accompanying drawings:
FIG. 1 is a block diagram of a hardware structure of a computer terminal (or mobile device) used for a method for three-dimensional reconstruction according to some embodiments of the present disclosure;
FIG. 2 is a schematic diagram of a method for three-dimensional reconstruction according to the present disclosure;
FIG. 3 is a schematic diagram of an alternative neighborhood code element distribution according to some embodiments of the present disclosure;
FIG. 4 is a schematic diagram of five alternative code element shapes according to some embodiments of the present disclosure;
FIG. 5 is a schematic diagram of a coding pattern according to some embodiments of the present disclosure;
FIG. 6 is a system for three-dimensional reconstruction according to some embodiments of the present disclosure;
FIG. 7 is another system for three-dimensional reconstruction according to some embodiments of the present disclosure;
FIG. 8 is a three-dimensional reconstruction apparatus according to some embodiments of the present disclosure.

The above accompanying drawings include the following reference numerals:
601. Measured object; 602, First processor; 603. Image acquisition device; 604. Projection device.

### Detailed Description of the embodiments

In order to enable those in the technical field to better understand the solution of the present disclosure, the technical solutions in the embodiments of the present disclosure will be clearly and completely described below in conjunction with the accompanying drawings in the embodiments of the present disclosure. Obviously, the described embodiments are only a part of the embodiments of the present disclosure, but not all of the embodiments.

It should be noted that the terms "first", "second," and the like in the description and claims of the present disclosure and the above accompanying drawings are used to distinguish between similar objects and not necessarily to describe a particular order or precedence. It should be understood that the data so used may be interchanged under appropriate circumstances so that the embodiments of the present disclosure described herein can be implemented in an order other than those illustrated or described herein. Furthermore, the terms "comprising", "having" and any variations thereof are intended to cover a non-exclusive inclusion, e.g., a process, method, system, product, or device that includes a series of steps or units is not necessarily limited to those explicitly listed steps or units, but may comprise other steps or units not explicitly listed or inherent to such process, method, product, or device.

According to the embodiments of the present disclosure, some embodiments of a method is further provided. It should be noted that the steps shown in the flow chart of the accompanying drawing may be implemented in a computer system such as a set of computer-executable instructions.

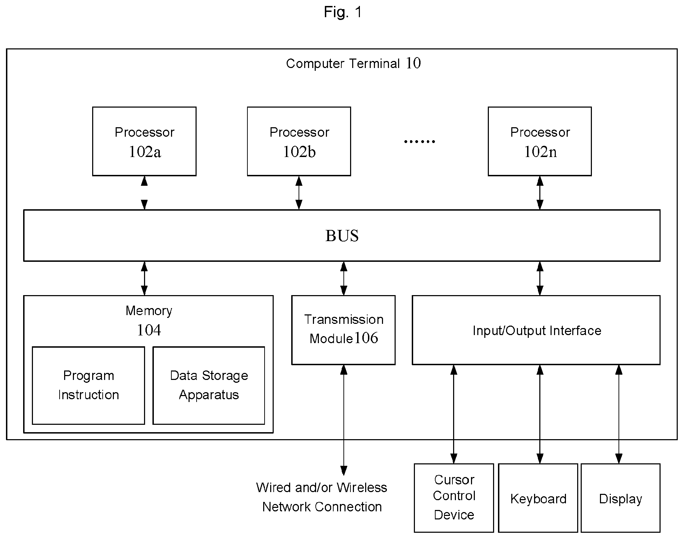

The embodiments of the method provided in the embodiments of the present disclosure may be performed in a mobile terminal, a computer terminal, a cloud server, or a similar arithmetical unit. FIG. 1 is a block diagram of a hardware structure of a computer terminal (or mobile device) used for implementing a method for three-dimensional reconstruction. As shown in FIG. 1, the computer terminal 10 (or mobile device 10) may include one or more (illustrated as 102a, 102b......102n in the figure) processors 102 (the processor 102 may include, but is not limited to, a processing device such as a microprocessor MCU or a programmable logic device FPGA), a memory 104 for storing data, and a transmission module 106 for a communication function. Besides, the computer terminal may further include a display, an input/output interface (I/O interface), a universal serial bus (USB) port (which may be included as one of the ports of the I/O interface), a network interface, a power supply, and/or a camera. Those of ordinary skill in the art may understand that the structure shown in FIG. 1 is only schematic, and does not limit the structure of the above electronic device. For example, the computer terminal 10 may further include components more or fewer than those shown in FIG. 1, or have a configuration different from that shown in FIG. 1.

It should be noted that the one or more processors 102 and/or other data processing circuits described above may be generally referred to herein as "data processing circuits". The data processing circuits may be embodied, in whole or in part, as software, hardware, firmware or any other combination. In addition, the data processing circuits may be a single stand-alone processing module, or may be incorporated, in whole or in part, into any of other elements of the computer terminal 10 (or the mobile device). As referred to in the embodiments of the present disclosure, the data processing circuits act as a processor control (e.g., selection of variable resistance termination paths connected to the interface).

The memory 104 may be used for storing software programs and modules of application software, such as a program instruction/data storage apparatus corresponding to the method for three-dimensional reconstruction in the embodiments of the present disclosure. The processor 102 performs various functional applications and data processing by running the software programs and the modules stored in the memory 104, thereby implementing the above method for three-dimensional reconstruction of the application program. The memory 104 may include high-speed random access memory and may further include a non-transitory memory, such as one or more magnetic storage apparatuses, flash memories, or other non-transitory solid-state memories. In some examples, the memory 104 may further include memories located remotely relative to the processor 102, which may be connected to the computer terminal 10 via networks. Examples of the above networks include, but are not limited to, the Internet, an intranet, a local area network, a mobile communication network, and combinations thereof.

The transmission module 106 is used to receive or transmit data via a network. A specific example of the network described above may include a wireless network provided by a communication provider of the computer terminal 10. In one example, the transmission module 106 includes a network interface controller (NIC), which may be connected to other network devices through a base station to communicate with the Internet. In one example, the transmission module 106 may be a radio frequency (RF) module, which is used to communicate with the Internet wirelessly.

The display may be, for example, a touch-screen liquid crystal display (LCD) that may enable a user to interact with a user interface of the computer terminal 10 (or mobile device).

According to the embodiments of the present disclosure, some embodiments of a method for three-dimensional reconstruction is provided. It should be noted that the steps shown in the flow chart of the accompanying drawing may be performed in a computer system such as a set of computer-executable instructions, and although a logical order is shown in the flow chart, in some cases, the steps shown or described may be performed in an order different from that here.

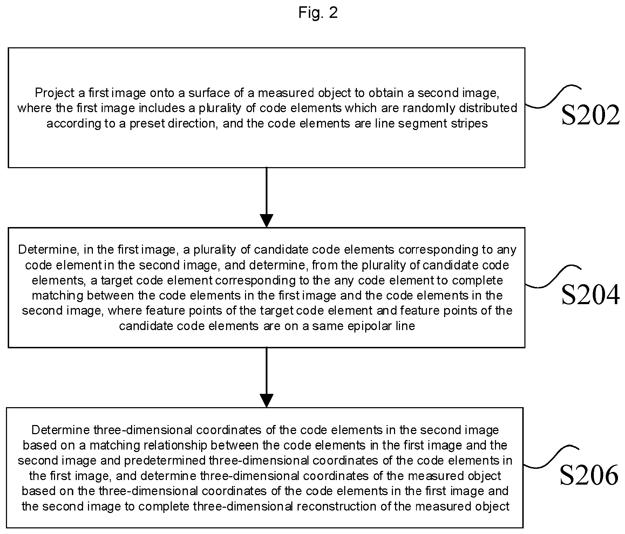

FIG. 2 is a flow chart of a method for three-dimensional reconstruction according to some embodiments of the present disclosure. As shown in FIG. 2, the method includes the following steps:
step S202, projecting a first image onto a surface of a measured object to obtain a second image, where the first image includes a plurality of code elements which are randomly distributed in a preset direction, and the code elements are line segment stripes;
step S204, determining, in the first image, a plurality of candidate code elements corresponding to any code element in the second image, and determining, from the plurality of candidate code elements, a target code element corresponding to the any code element to complete matching between the code elements in the first image and the code elements in the second image, where feature points of the target code element and feature points of the candidate code elements are on a same epipolar line; and
step S206, determining three-dimensional coordinates of the code elements in the second image based on a matching relationship between the code elements in the first image and the second image and predetermined three-dimensional coordinates of the code elements in the first image, and determining three-dimensional coordinates of the measured object based on the three-dimensional coordinates of the code elements in the first image and the second image to complete three-dimensional reconstruction of the measured object.

Through the above steps, a purpose of increasing the code element coding capacity may be achieved through a line segment stripe coding mode, thereby realizing the technical effect of improving the scanning efficiency, and further solving the technical problem of low scanning efficiency caused by small code element coding capacity.

It should be noted that three-dimensional reconstruction refers to the establishment of mathematical models suitable for computer representation and processing of three-dimensional objects, which is the basis for processing, operating and analyzing the properties of the three-dimensional objects in a computer environment, as well as the establishment of virtual reality technology to express objective events in a computer. Structured light temporal coding and spatial coding technologies are usually used in the three-dimensional reconstruction technology. The difficulty of the spatial coding structured light is to use pixel spatial gray information to encode or decode each pixel point stably and reliably, and one method in the related art is to encode a specific pixel point through certain code element information, and encode or decode each code element by using epipolar constraint conditions and the relative displacement relationship between a neighborhood code element and the code element in an image through the coding mode of large and small circular code elements, so as to realize the reconstruction of each code element point. This method has the disadvantages that the code element coding capacity is limited, only sparse code element points can be reconstructed, the data of a single frame is less, and the scanning efficiency is low; and this method is greatly affected by the surface texture of the object. Another method is to use the correlation between pixel blocks to match homonymous points in the form of random speckle, for example, a pseudo-random speckle image is projected onto the surface of the measured object through the projection device, and an improved SGM (semi-global matching, stereo matching) algorithm is used to match the image blocks, thereby obtaining three-dimensional data on the surface of the measured object. This method has the disadvantages that a space suitable for matching the image blocks is large, the accuracy and detail of reconstructed data are poor, and the reconstruction of complex objects is difficultly to realize.

According to the method provided by the present disclosure, by using a code element coding mode of the line segment stripe and utilizing a plurality of feature points in the line segment stripe as well as the random distribution of the code elements, the coding capacity is increased, the data volume of a single-frame image is increased, and the scanning efficiency is further improved. Meanwhile, because the method provided by the present disclosure features line segment stripes distribution, the distribution density of the code elements is high, which improves the accuracy of the reconstructed data acquired.

The method provided by the present disclosure may be applied to scanners such as an oral cavity scanner, a face scanner, an industrial scanner, and a professional scanner, and may realize the three-dimensional reconstruction of objects or scenes such as teeth, faces, human bodies, industrial products, industrial equipment, cultural relics, artworks, artificial limbs, medical appliances, and buildings.

In step S202, the first image is an original image projected by the projection device, the second image is an image acquired by the image acquisition device after the first image is projected onto the surface of the measured object and deformed, the plurality of code elements in the first image have the same orientation, and the spacing between the code elements is determined randomly, for example, the spacing between a first code element and a second code element is 100 µm, and the spacing between the second code element and a third code element is 80 µm. The code elements are randomly distributed up and down in the horizontal direction of the image (the epipolar line direction of the camera), the features of the code elements include at least two extractable gray feature point patterns, and the feature points are distributed up and down at preset spacings.

It should be noted that the first image is a predetermined coding image acquired by the projection device, for example, a coding image predetermined by the computer is transmitted to the projection device.

In step S204, the candidate code elements of all the code elements in the second image are determined in the first image, one code element corresponds to a plurality of candidate code elements, and the first code element in the first image is determined as the candidate code element under a condition that all the feature points of the first code element **in** the first image and the feature points of the second code element in the second image are on a same epipolar line.

In step S206, the target code elements in the first image correspond to the code elements in the second image one to one, the first image is preset, that is, the projection parameters of the code elements in the first image are preset, and the three-dimensional coordinates of the code elements in the second image are determined according to the one-to-one correspondence relationship between the target code elements and the code elements in the second image in combination with a triangulation method.

The above steps S202 to S206 will be described in detail below with reference to specific embodiments.

In step S204, the target code elements of the code elements in the second image may be determined in the first image by means of neighborhood code element matching. Alternatively, first, a first neighborhood code element set of any code element in the second image and a plurality of second neighborhood code element sets of the plurality of candidate code elements are determined; the number of matching neighborhood code elements in the plurality of second neighborhood code element sets with neighborhood code elements in the first neighborhood code element set is determined, and a second neighborhood code element set with the largest matching number in the plurality of second neighborhood code element sets is determined as a target second neighborhood code element set; and a candidate code element corresponding to the target second neighborhood code element set is determined as the target code element.

It should be noted that the first neighborhood code element set is a neighborhood code element set of a code element in the second image, for example, taking a code element p in the second image as a line segment with a set length and two endpoints corresponding to the line segment as an example, the neighborhood code element set of the code element p is {*p*¹,*p*²,*p*³,*p*⁴}; and the second neighborhood code element set is a neighborhood code element set of a candidate code element of any code element in the second image, for example, the candidate code element of the code element p is a code element q, the neighborhood code element set of the code element q is {*q*¹,*q*²,*q*³,*q*⁴}, in the case that there are three candidate code elements of the code element p, for example, *qᵢ*, where i = 1, 2, 3, there are three second neighborhood code element sets $\left\{{q}_{1}^{1}, {q}_{1}^{2}, {q}_{1}^{3}, {q}_{1}^{4}\right\}$, $\left\{{q}_{2}^{1}, {q}_{2}^{2}, {q}_{2}^{3}, {q}_{2}^{4}\right\} , \left\{{q}_{3}^{1}, {q}_{3}^{2}, {q}_{3}^{3}, {q}_{3}^{4}\right\}$, and in the case that there are a plurality of code elements p, it is similar to the above case, which will not be described here.

It should be further noted that, taking the code element p as an example, for each candidate code element qᵢ of the code element p, i is a positive integer, first, it is determined whether the code element p¹ is matched with the first neighborhood code element ${q}_{1}^{1}$ of the candidate code element *q*₁, and then all the candidate code elements of the code element p are searched in turn; and it is determined whether the neighborhood code elements of all the candidate code elements are matched with the code element p¹, the matching number of the candidate code elements matched with the code element p¹ is increased by 1, for example, if the code element ${q}_{1}^{1}$ is matched with the code element p¹, the matching number of the candidate code elements *q*₁ is 1, and if the code element ${q}_{1}^{2}$ is matched with the code element p², the matching number of the candidate code elements *q*₁ increased by 1 to 2. The candidate code element with the largest matching number is determined as the target code element, and taking the code element p as an example, when the number of the candidate code elements *q*₁ matched with the code element p is the largest, the candidate code element *q*₁ are determined as the target code element matched with the code element p.

In some alternative modes, when the neighborhood code elements of any code element are determined, a plurality of feature points of the any code element may be determined first, then code elements with the nearest distances on a left side and a right side of the epipolar line where the plurality of feature points are located are determined as neighborhood code elements of the any code element, and the neighborhood code elements of the any code element are formed into the first neighborhood code element set.

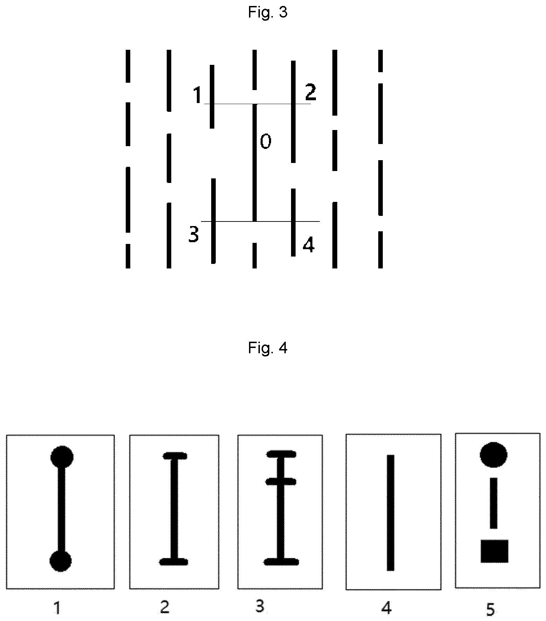

Alternatively, for any code element, neighborhood code elements thereof are uniquely distributed on the epipolar line. As shown in FIG. 3, for any code element 0, four neighborhood code elements thereof are distributed as code elements 1, 2, 3, and 4, the neighborhood code element 1 is a code element with the nearest distance on a left side on the horizontal epipolar line of the first feature point of the code element 0, the code element 3 is a code element with the nearest distance on a left side on the horizontal epipolar line of the second feature point of the code element 0, and similarly, the code elements 2 and 4 are neighborhood code elements on right sides. Each code element may be represented by 5 code element numbers, that is, a code element number and 4 neighborhood code element numbers thereof.

The code element number may be determined in a variety of modes. One alternative mode is to number all the code elements in the first image and the second image according to pixel coordinates of the feature points of the code element; compare the neighborhood code elements in the first neighborhood code element set with the neighborhood code elements in corresponding areas in the plurality of second neighborhood code element sets sequentially, determine the neighborhood code elements to be matched with the neighborhood code elements in the corresponding areas under a condition that the code element numbers are the same, and determine the number of matching each of the plurality of second neighborhood code element sets with the neighborhood code elements in the first neighborhood code element set.

Alternatively, the code element number needs to ensure that the number of each code element is unique. In the actual application scene, the code element number may be determined in a variety of modes. One alternative mode is to determine the code element number by using the pixel coordinates of the feature points of the code elements in the image. For example, a certain code element includes a line segment and endpoints (upper endpoint and lower endpoint) corresponding to two line segments. The upper endpoint and the lower endpoint respectively correspond to two feature points of the code element. Taking one of the feature points, for example, the upper endpoint, if the pixel coordinates of the upper endpoint are (x, y), the width of the image is imagewidth and the height of the image is imageheight, the code element number is calculated as x + y * imagewidth. The above calculation method is one of various calculation methods, and is not limited to other methods for determining the code element number by using the position coordinates of the feature points of the code elements in an image, and it is only necessary to ensure that each code element number in the image is unique, that is, the code element corresponds to the code element number one by one, and the code element number cannot be repeated.

In another alternative mode, the code element number may be determined by the positions of the code elements stored in a database, or the code element number of each code element may be determined in an order in which the code elements are extracted from the database.

It should be noted that, in the embodiments of the present disclosure, the first image and the second image are numbered in the same manner.

In some embodiments of the present disclosure, prior to determining, in the first image, a plurality of candidate code elements corresponding to any code element in the second image, the method further includes: adjusting the first image and the second image to planes in a same direction or be a same plane.

It should be noted that, in the field of stereo vision, an epipolar line constraint relationship exists between the projected image (the first image) and the acquired image (the second image), that is, the feature points in the acquired image corresponding to the feature points on a same epipolar line in the projected image, are also located on a same epipolar line. By using the epipolar line correction principle, the epipolar lines corresponding to the projected image and an imaged image may be corrected to a same horizontal direction. By using the calibrated system calibration parameters, the first image in the projection device is corrected to the horizontal direction of the epipolar line. Meanwhile, since the projected image does not change with time and space, the first image correction only needs to be performed once. The epipolar line correction is performed on the second image, where the corresponding feature points of the corrected second image and the corrected first image are on a plane in a same direction.

After the correction is completed, filtering and smoothing processing is performed on the second image, including, but not limited to, Gaussian filtering, and then feature points of the second image are extracted. Meanwhile, the central lines of the stripes in the code elements are extracted. Taking the line segment coding pattern as an example, the feature points of the upper and lower endpoints of the line segment and the central line of the line segment are extracted.

The first image includes a plurality of code elements which are randomly distributed in a preset direction, the code elements are line segment stripes, and at least one preset code element is selected from a preset code element set, where the code element in the preset code element set at least includes a line segment with a preset length and two endpoints corresponding to the line segment; and the plurality of at least one code element are randomly distributed in the preset direction and at a preset distance to form the first image. As shown in FIG. 4, five types of line segment stripes meeting the embodiments of the present disclosure are shown. The first type is a line segment and two circular endpoints corresponding to the line segment. The second type is a line segment with a first preset length and endpoints of two line segments with a second preset length corresponding to the line segment with the first preset length, where the first preset length is greater than second preset length. The third type is a line segment with a first preset length and endpoints of two line segments with a second preset length corresponding to the line segment with the first preset length, where an intersection of the line segment intersects with the second preset length and the line segment with the first preset length. The fourth type is a line segment. The fifth type is a line segment and two corresponding endpoints, where the first endpoint is a circular endpoint, the second endpoint is a square endpoint, and the endpoints are not in contact with the line segment.

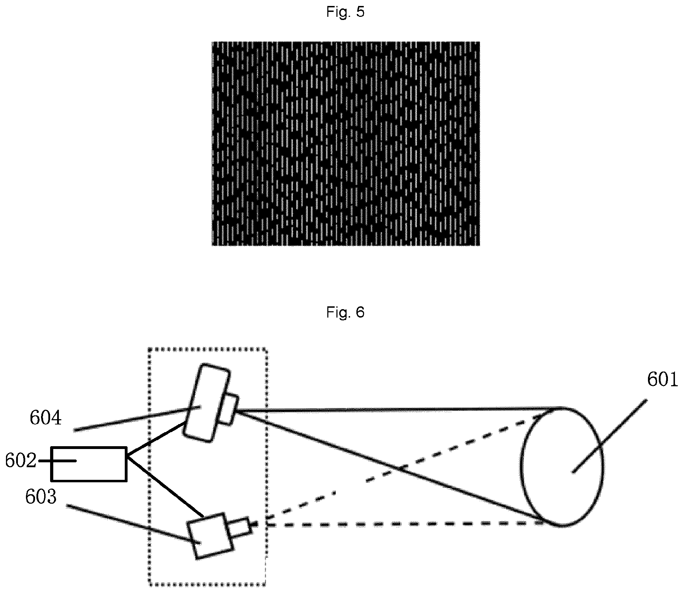

It should be noted that, the first image in the present disclosure is composed of code elements that are randomly distributed up and down in the horizontal direction of the image (the epipolar line direction of the image acquisition device), the feature points of the code elements include at least two extractable gray feature point patterns, and the feature points are distributed at a certain distance up and down, and each of the feature points of the code elements at least includes a line segment stripe that constitutes a code element together with the feature points. FIG. 5 shows a coding pattern generated by a line segment code element, and the extractable gray features may be that: two endpoints of a line segment, a graphic corner point, an intersection point, a center point, and the like have feature points; and the distance between the feature points in the code element may be fixed or random. For example, the length of the line segment may be fixed or random, and at least one line segment is included.

After determining a target code element set corresponding to each code element in the second image, the method further includes: determining central lines of the code elements in the first image and the second image; and determining a mapping relationship between the central lines of the code elements in the first image and the second image according to a mapping relationship among the target code elements corresponding to all the code elements in the second image.

Alternatively, the matching result of each code element is directly transmitted to the central line where the code element is located, and the matching of each pixel on the central line may be directly completed by using the matching result.

The second image is generated by projection of the projection device onto the surface of the measured object. It can be understood that the first image is a predetermined code element image projected by the projection device. Obviously, the three-dimensional coordinates of each code element may be determined according to the preset calibration result. The first image is projected, the central line and the feature points of each code element in the first image are on a same projection plane, and the projection plane equation may also be predetermined.

According to each matched code element in the second image, the depth calculation may be performed on the feature points and the central points in the second image by combining the three-dimensional coordinates of the corresponding target code elements in the first image and using the triangulation principle, so as to acquire the three-dimensional coordinates of the feature points and the central points in the second image.

Based on the above method, the present disclosure may realize quick and accurate reconstruction of the three-dimensional data on the surface of the measured object. In the present disclosure, a stripe central line reconstruction method may acquire accurate three-dimensional data; and due to the adoption of a random stripe mode, the number of coding points is increased (any pixel point in the stripe center is a coding point), the data redundancy is improved, and the scanning efficiency is further improved.

Some embodiments of the present disclosure further provide a system for three-dimensional reconstruction, as shown in FIG. 6, including: an image acquisition device 603, a projection device 604, and a first processor 602. An included angle between a lens of the image acquisition device 603 and a lens of the projection device 604 is smaller than a preset angle. The projection device 604 is configured to project a first image onto a surface of a measured object 601, where the first image includes a plurality of code elements which are randomly distributed in a preset direction, and the code elements are line segment stripes; the image acquisition device 603 is configured to acquire a second image obtained after the first image is projected onto the surface of the measured object 601; and the first processor 602 is configured to match code elements in the first image and the second image, determine three-dimensional coordinates of the code elements in the second image based on a matching relationship between the code elements in the first image and the second image and predetermined three-dimensional coordinates of the code elements in the first image, and determine three-dimensional coordinates of the measured object 601 based on the three-dimensional coordinates of the code elements in the first image and the second image to complete three-dimensional reconstruction of the measured object 601.

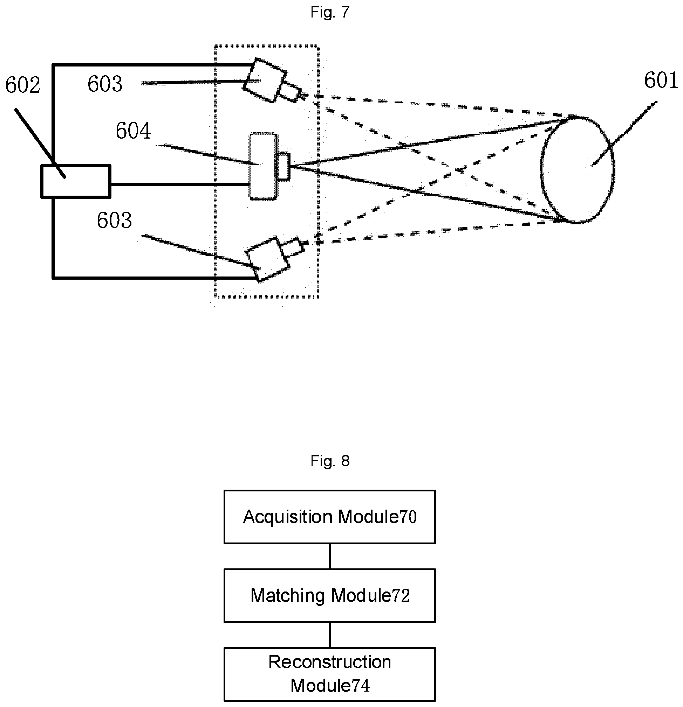

The image acquisition device 603 includes, but is not limited to, a grayscale camera and a color camera, and a projection method of the projection device 604 includes, but is not limited to, projection methods such as DLP (Digital Light Processing, digital light processing), MASK (mask projection), and DOE (diffraction projection), which can project structured light patterns. In some alternative modes, there may be a plurality of image acquisition devices 103, for example, as shown in FIG. 7, in the case that there are two image acquisition devices 603, the two image acquisition devices 603 acquire the images projected by the projection device 604 onto the surface of the measured object 601 to obtain a third image and a fourth image respectively. The matching process of code elements in the third image and the fourth image is similar to that in the first image and the second image, which will not be described again.

It should also be noted that in the case that there is only one image acquisition device 603 in the system for three-dimensional reconstruction, epipolar line correction is performed on the first image (projected image) and the second image (acquired image). In the case that there are a plurality of image acquisition devices 603, a plurality of second images (acquired images) may be obtained, one option mode is that the plurality of second images (acquired images) are combined in pairs to perform epipolar line correction, and the other option method is that the first image and the plurality of second images are combined in pairs to perform epipolar line correction, for example, in the case that there are two image acquisition devices 603, the plurality of acquired second images are a third image and a fourth image, and the first image, the third image, and the fourth image are combined in pairs to perform epipolar line correction.

Some embodiments of the present disclosure further provide an apparatus for three-dimensional reconstruction, as shown in FIG. 8, including: an acquisition module 70, configured to project a first image onto a surface of a measured object to obtain a second image, where the first image includes a plurality of code elements which are randomly distributed in a preset direction, and the code elements are line segment stripes; a matching module 72, configured to determine, in the first image, a plurality of candidate code elements corresponding to any code element in the second image, and determine, from the plurality of candidate code elements, a target code element corresponding to the any code element to complete matching between the code elements in the first image and the code elements in the second image, where feature points of the target code element and feature points of the candidate code elements are on a same epipolar line; and a reconstruction module 74, configured to determine three-dimensional coordinates of the code elements in the second image based on a matching relationship between the code elements in the first image and the second image and predetermined three-dimensional coordinates of the code elements in the first image, and determine three-dimensional coordinates of the measured object based on the three-dimensional coordinates of the code elements in the first image and the second image to complete three-dimensional reconstruction of the measured object.

The matching module 72 includes: a first determining sub-module, configured to determine a first neighborhood code element set of any code element in the second image and a plurality of second neighborhood code element sets of the plurality of candidate code elements; determine the number of matching neighborhood code elements in the plurality of second neighborhood code element sets with neighborhood code elements in the first neighborhood code element set, and determine a second neighborhood code element set with the largest matching number in the plurality of second neighborhood code element sets as a target second neighborhood code element set; and determine a candidate code element corresponding to the target second neighborhood code element set as the target code element.

The first determining sub-module includes: a first determining unit and a second determining unit, where the first determining unit is configured to determine a plurality of feature points of the target code element; and determine code elements with the nearest distances on a left side and a right side of the epipolar line where the plurality of feature points are located as neighborhood code elements of the target code element, and form the neighborhood code elements of the target code element into the first neighborhood code element set; and the second determining unit is configured to number all the code elements in the first image and the second image according to pixel coordinates of the feature points of the code elements; compare the neighborhood code elements in the first neighborhood code element set with neighborhood code elements in corresponding areas in the plurality of second neighborhood code element sets sequentially, and under a condition that code element numbers are the same, determine the neighborhood code elements to be matched with the neighborhood code elements in the corresponding areas; and determine the number of matching each of the plurality of second neighborhood code element sets with the neighborhood code elements in the first neighborhood code element set.

The matching module 72 further includes an adjusting sub-module, configured to adjust the first image and the second image to a plane in a same direction.

The acquisition module 70 includes: a generation sub-module, configured to select at least one preset code element from a preset code element set, where the code element in the preset code element set at least includes a line segment with a preset length and two endpoints corresponding to the line segment; and randomly distribute the plurality of at least one preset code element in the preset direction and at a preset distance to form the first image.

The matching module 72 further includes a mapping sub-module, configured to determine central lines of the code elements in the first image and the second image; and determine a mapping relationship between the central lines of the code elements in the first image and the second image according to a mapping relationship among the target code elements corresponding to all the code elements in the second image.

According to another aspect of the embodiments of the present disclosure, a non-transitory storage medium is further provided, including a stored program, where the program, when being run, controls a device in which the non-transitory storage medium is located to perform the above method for three-dimensional reconstruction.

According to another aspect of the embodiments of the present disclosure, a processor is further provided. The processor is configured to run a program, where when the program is run, the above method for three-dimensional reconstruction is performed.

The above processor is configured to run a program performing the following functions: projecting a first image onto a surface of a measured object to obtain a second image, where the first image includes a plurality of code elements which are randomly distributed in a preset direction, and the code elements are line segment stripes; determining, in the first image, a plurality of candidate code elements corresponding to any code element in the second image, and determining, from the plurality of candidate code elements, a target code element corresponding to the any code element to complete matching between the code elements in the first image and the code elements in the second image, where feature points of the target code element and feature points of the candidate code elements are on a same epipolar line; and determining three-dimensional coordinates of the code elements in the second image based on a matching relationship between the code elements in the first image and the second image and predetermined three-dimensional coordinates of the code elements in the first image, and determining three-dimensional coordinates of the measured object based on the three-dimensional coordinates of the code elements in the first image and the second image to complete three-dimensional reconstruction of the measured object.

The above processor performs the above method for three-dimensional reconstruction. By using a code element coding mode of the line segment stripe and a plurality of feature points in the line segment stripe as well as the random distribution of the code elements, the coding capacity is increased, the data volume of a single-frame image is increased, and the scanning efficiency is further improved. Meanwhile, because the method provided by the present disclosure features line segment stripes distribution, the distribution density of the code elements is high, which improves the accuracy of the reconstructed data acquired.

In the above embodiments of the present disclosure, the description of each embodiment has its own emphasis, and for a part not described in detail in a certain embodiment, reference can be made to the relevant description of other embodiments.

In the several embodiments provided by the present disclosure, it should be understood that the disclosed technical content may be implemented in other ways. The embodiments of the apparatus described above are merely illustrative, for example, the division of the unit may be a logical function division, and may have another division in the actual implementation, for example, a plurality of units or components may be combined or integrated into another system, or some features may be omitted or not implemented. On the other hand, the coupling or direct coupling or communication connection between each other shown or discussed may be indirect coupling or communication connection through some interfaces, units or modules, which may be electrical or other forms.

The units described as separate parts may or may not be physically separate, and parts displayed as units may or may not be physical units, that is, may be located in one position, or may be distributed on a plurality of units. Part or all of the units may be selected according to actual needs to achieve the purpose of the solution of the present embodiment.

In addition, each functional unit in each embodiment of the present disclosure may be integrated in one processing unit, or each unit may physically exist separately, or two or more units may be integrated in one unit. The above integrated unit may be implemented in the form of hardware or a software function unit.

The integrated unit, if implemented in the form of a software functional unit and sold or used as a separate product, may be stored in a computer-readable storage medium. Based on such understanding, the technical solution of the present disclosure may be embodied in the form of a software product, and the computer software product is stored in a storage medium, and includes several instructions to cause a computer device (which may be a personal computer, a server, a network device, etc.) to perform all or part of the steps of the methods of the various embodiments of the present disclosure. The aforementioned storage media include various media capable of storing program codes, such as a U disk, a read-only memory (ROM, Read-Only Memory), a random access memory (RAM, Random Access Memory), a mobile hard disk, a magnetic disk, or an optical disk.

The above is only the preferred embodiment of the present disclosure. It should be noted that, for those of ordinary skill in the art, several improvements and modifications can be made.

### Industrial Applicability

The technical solution provided by the embodiments of the present disclosure may be applied in the field of three-dimensional reconstruction. In the embodiments of the present disclosure, by adopting a method: projecting a first image onto a surface of a measured object to obtain a second image, where the first image includes a plurality of code elements which are randomly distributed in a preset direction, and the code elements are line segment stripes; determining, in the first image, a plurality of candidate code elements corresponding to any code element in the second image, and determining, from the plurality of candidate code elements, a target code element corresponding to the any code element to complete matching between the code elements in the first image and the code elements in the second image, where feature points of the target code element and feature points of the candidate code elements are on a same epipolar line; and determining three-dimensional coordinates of the code elements in the second image based on a matching relationship between the code elements in the first image and the second image and predetermined three-dimensional coordinates of the code elements in the first image, and determining three-dimensional coordinates of the measured object based on the three-dimensional coordinates of the code elements in the first image and the second image to complete three-dimensional reconstruction of the measured object, through a line segment stripe coding mode, a purpose of increasing the code element coding capacity is achieved, thereby realizing the technical effect of improving the scanning efficiency, and further solving the technical problem of low scanning efficiency caused by small code element coding capacity.

## Claims

1. A computer-implemented method for three-dimensional reconstruction, comprising:
projecting a first image onto a surface of a measured object to obtain a second image, wherein the first image comprises a plurality of code elements which are randomly distributed in a preset direction, and the code elements are line segment stripes, wherein the second image is an image acquired by the image acquisition device after the first image is projected onto the surface of the measured object (S202);
determining, in the first image, a plurality of candidate code elements corresponding to any code element in the second image, and determining, from the plurality of candidate code elements, a target code element corresponding to the any code element to complete matching between the code elements in the first image and the code elements in the second image, wherein feature points of the target code element and feature points of the candidate code elements are on a same epipolar line(S204); and
determining three-dimensional coordinates of the code elements in the second image based on a matching relationship between the code elements in the first image and the second image and predetermined three-dimensional coordinates of the code elements in the first image, and determining three-dimensional coordinates of the measured object based on the three-dimensional coordinates of the code elements in the first image and the second image to complete three-dimensional reconstruction of the measured object(S206);
**characterized in that** the method further comprises:
selecting at least one code element from a preset code element set, wherein the code element in the preset code element set at least comprises a line segment with a preset length and two endpoints corresponding to the line segment; and
randomly distributing the plurality of the at least one code element in the preset direction and at a preset distance to form the first image.

2. The method as claimed in claim 1, wherein determining, from the plurality of candidate code elements, the target code element corresponding to the any code element to complete matching between the code elements in the first image and the code elements in the second image comprises:
determining a first neighborhood code element set of the any code element in the second image and a plurality of second neighborhood code element sets of the plurality of candidate code elements;
determining the number of matching neighborhood code elements in the plurality of second neighborhood code element sets with neighborhood code elements in the first neighborhood code element set, and determining a second neighborhood code element set with the largest matching number in the plurality of second neighborhood code element sets as a target second neighborhood code element set; and
determining a candidate code element corresponding to the target second neighborhood code element set as the target code element.

3. The method as claimed in claim 2, wherein the determining the first neighborhood code element set of the any code element in the second image comprises:
determining a plurality of feature points of the any code element; and
determining code elements with the nearest distances on a left side and a right side of the epipolar line where the plurality of feature points are located as neighborhood code elements of the any code element, and forming the neighborhood code elements of the any code element into the first neighborhood code element set.

4. The method as claimed in claim 2 or 3, wherein the determining the number of matching neighborhood code elements in the plurality of the second neighborhood code element sets with neighborhood code elements in the first neighborhood code element set comprises:
numbering all the code elements in the first image and the second image according to pixel coordinates of the feature points of the code elements;
comparing the neighborhood code elements in the first neighborhood code element set with neighborhood code elements in corresponding areas in the plurality of second neighborhood code element sets sequentially, and under a condition that code element numbers are the same, determining the neighborhood code elements to be matched with the neighborhood code elements in the corresponding areas; and
determining the number of matching each of the plurality of second neighborhood code element sets with the neighborhood code elements in the first neighborhood code element set.

5. The method as claimed in claim 4, wherein the code element corresponds to the code element number one by one; the method further comprises:
determining the code element number by the positions of the code elements stored in a database;or,
determining the code element number of each code element in an order in which the code elements are extracted from the database.

6. The method as claimed in any one of the preceding claims, wherein prior to determining, in the first image, the plurality of candidate code elements corresponding to the any code element in the second image, the method further comprises:
adjusting the first image and the second image to a plane in a same direction.

7. The method as claimed in any one of the preceding claims, wherein after determining the target code element set corresponding to each code element in the second image, the method further comprises:
determining central lines of the code elements in the first image and the second image; and
determining a mapping relationship between the central lines of the code elements in the first image and the second image according to a mapping relationship among the target code elements corresponding to all the code elements in the second image.

8. The method as claimed in any one of the preceding claims, wherein the second image is an image acquired by the image acquisition device after the first image is projected onto the surface of the measured object and deformed, the plurality of code elements in the first image have the same orientation, and the spacing between the code elements is determined randomly.

9. The method as claimed any one of the preceding claims, wherein feature points of the code elements comprise at least two extractable gray feature point patterns, and the extractable gray features comprise any one of the following: two endpoints of a line segment, a graphic corner point, an intersection point, a center point.

10. A system for three-dimensional reconstruction, comprising:
an image acquisition device 603, a projection device 604, and a first processor 602, wherein
the projection device 603 is configured to project a first image onto a surface of a measured object 601;
the image acquisition device 603 is configured to acquire a second image obtained after the first image is projected onto the surface of the measured object 601; and
the first processor 602 is configured to match code elements in the first image and the second image, determine three-dimensional coordinates of the code elements in the second image based on a matching relationship between the code elements in the first image and the second image and predetermined three-dimensional coordinates of the code elements in the first image, and determine three-dimensional coordinates of the measured object 601 based on the three-dimensional coordinates of the code elements in the first image and the second image to complete three-dimensional reconstruction of the measured object 601;
**characterized in that** the first processor 602 is further configured to:
select at least one code element from a preset code element set, wherein the code element in the preset code element set at least comprises a line segment with a preset length and two endpoints corresponding to the line segment; and
randomly distribute the plurality of the at least one code element in the preset direction and at a preset distance to form the first image.

11. The system as claimed in claim 10, wherein the first processor is configured to:
determine, in the first image, a plurality of candidate code elements corresponding to any code element in the second image, and determining, from the plurality of candidate code elements, a target code element corresponding to the any code element to complete matching between the code elements in the first image and the code elements in the second image, wherein feature points of the target code element and feature points of the candidate code elements are on a same epipolar line.

12. The system as claimed in claim 11, wherein the the first processor is configured to:
determine a first neighborhood code element set of the any code element in the second image and a plurality of second neighborhood code element sets of the plurality of candidate code elements;
determine the number of matching neighborhood code elements in the plurality of second neighborhood code element sets with neighborhood code elements in the first neighborhood code element set, and determine a second neighborhood code element set with the largest matching number in the plurality of second neighborhood code element sets as a target second neighborhood code element set; and
determine a candidate code element corresponding to the target second neighborhood code element set as the target code element.

13. The system as claimed in claim 12, wherein the first processor is configured to:
determine a plurality of feature points of the target code element; and
determine code elements with the nearest distances on a left side and a right side of the epipolar line where the plurality of feature points are located as neighborhood code elements of the target code element, and forming the neighborhood code elements of the target code element into the first neighborhood code element set.

14. The system as claimed in claim 12 or 13, wherein the first processor is configured to:
number all the code elements in the first image and the second image according to pixel coordinates of the feature points of the code elements;
compare the neighborhood code elements in the first neighborhood code element set with neighborhood code elements in corresponding areas in the plurality of second neighborhood code element sets sequentially, and under a condition that code element numbers are the same, determining the neighborhood code elements to be matched with the neighborhood code elements **in** the corresponding areas; and
determine the number of matching each of the plurality of second neighborhood code element sets with the neighborhood code elements in the first neighborhood code element set.

## Patentansprüche

1. Computerimplementiertes Verfahren zur dreidimensionalen Rekonstruktion, umfassend:
Projizieren eines ersten Bildes auf eine Oberfläche eines vermessenen Objekts, um ein zweites Bild zu erhalten, wobei das erste Bild eine Vielzahl von Codeelementen umfasst, die in einer vorgegebenen Richtung zufällig verteilt sind, und wobei es sich bei den Codeelementen um Liniensegmentstreifen handelt, wobei das zweite Bild ein Bild ist, das von der Bildaufnahmeeinrichtung aufgenommen wird, nachdem das erste Bild auf die Oberfläche des vermessenen Objekts projiziert wurde (S202);
Bestimmen einer Vielzahl von Kandidaten-Codeelementen in dem ersten Bild, die einem beliebigen Codeelement in dem zweiten Bild entsprechen, und Bestimmen eines Ziel-Codeelements aus der Vielzahl von Kandidaten-Codeelementen, das dem beliebigen Codeelement entspricht, um eine Zuordnung zwischen den Codeelementen in dem ersten Bild und den Codeelementen in dem zweiten Bild abzuschließen, wobei Merkmalspunkte des Ziel-Codeelements und Merkmalspunkte der Kandidaten-Codeelementen auf derselben Epipolarlinie liegen (S204); und
Bestimmen dreidimensionaler Koordinaten der Codeelemente in dem zweiten Bild auf Grundlage einer Zuordnungsbeziehung zwischen den Codeelementen in dem ersten Bild und dem zweiten Bild und vorbestimmter dreidimensionaler Koordinaten der Codeelemente in dem ersten Bild, und Bestimmen dreidimensionaler Koordinaten des vermessenen Objekts auf Grundlage der dreidimensionalen Koordinaten der Codeelemente in dem ersten Bild und dem zweiten Bild, um eine dreidimensionale Rekonstruktion des vermessenen Objekts abzuschließen (S206);
**dadurch gekennzeichnet, dass** das Verfahren ferner umfasst:
Auswählen mindestens eines Codeelements aus einem vorgegebenen Codeelementsatz, wobei das Codeelement in dem vorgegebenen Codeelementsatz mindestens ein Liniensegment mit einer vorgegebenen Länge und zwei Endpunkte umfasst, die dem Liniensegment entsprechen; und
Zufälliges bzw. randomisiertes Verteilen der Vielzahl des mindestens einen Codeelements in der vorgegebenen Richtung und in einem vorgegebenen Abstand, um das erste Bild zu bilden.

2. Verfahren nach Anspruch 1, wobei das Bestimmen des Ziel-Codeelements, das dem beliebigen Codeelement entspricht, aus der Vielzahl von Kandidaten-Codeelementen, um die Zuordnung zwischen den Codeelementen in dem ersten Bild und den Codeelementen in dem zweiten Bild abzuschließen, Folgendes umfasst:
Bestimmen eines ersten Nachbarschafts-Codeelementsatzes des beliebigen Codeelements in dem zweiten Bild und einer Vielzahl von zweiten Nachbarschafts-Codeelementsätzen der Vielzahl von Kandidaten-Codeelementen;
Bestimmen der Anzahl übereinstimmender Nachbarschafts-Codeelemente in der Vielzahl von zweiten Nachbarschafts-Codeelementsätzen mit Nachbarschafts-Codeelementen in dem ersten Nachbarschafts-Codeelementsatz, und Bestimmen eines zweiten Nachbarschafts-Codeelementsatzes mit der größten Übereinstimmungsanzahl in der Vielzahl von zweiten Nachbarschafts-Codeelementsätzen als Ziel-Zweit-Nachbarschafts-Codeelementsatz; und
Bestimmen eines Kandidaten-Codeelements, das dem Ziel-Zweit-Nachbarschafts-Codeelementsatz entspricht, als das Ziel-Codeelement.

3. Verfahren nach Anspruch 2, wobei das Bestimmen des ersten Nachbarschafts-Codeelementsatzes des beliebigen Codeelements in dem zweiten Bild Folgendes umfasst:
Bestimmen einer Vielzahl von Merkmalspunkten des beliebigen Codeelements; und
Bestimmen von Codeelementen mit den geringsten Abständen auf einer linken Seite und einer rechten Seite der Epipolarlinie, auf der die Vielzahl von Merkmalspunkten liegt, als Nachbarschafts-Codeelemente des beliebigen Codeelements, und Bilden der Nachbarschafts-Codeelemente des beliebigen Codeelements zu dem ersten Nachbarschafts-Codeelementsatz.

4. Verfahren nach Anspruch 2 oder 3, wobei das Bestimmen der Anzahl übereinstimmender Nachbarschafts-Codeelemente in der Vielzahl der zweiten Nachbarschafts-Codeelementsätze mit Nachbarschafts-Codeelementen in dem ersten Nachbarschafts-Codeelementsatz Folgendes umfasst:
Nummerieren aller Codeelemente in dem ersten Bild und dem zweiten Bild entsprechend den Pixelkoordinaten der Merkmalspunkte der Codeelemente;
sequenzielles Vergleichen der Nachbarschafts-Codeelemente in dem ersten Nachbarschafts-Codeelementsatz mit Nachbarschafts-Codeelementen in entsprechenden Bereichen in der Vielzahl von zweiten Nachbarschafts-Codeelementsätzen, und unter einer Bedingung, dass Codeelementnummern gleich sind, Bestimmen der Nachbarschafts-Codeelemente als mit den Nachbarschafts-Codeelementen in den entsprechenden Bereichen übereinstimmend; und
Bestimmen der Anzahl der Übereinstimmung jedes der Vielzahl von zweiten Nachbarschafts-Codeelementsätzen mit den Nachbarschafts-Codeelementen in dem ersten Nachbarschafts-Codeelementsatz.

5. Verfahren nach Anspruch 4, wobei das Codeelement der Codeelementnummer eins zu eins entspricht; das Verfahren umfasst ferner:
Bestimmen der Codeelementnummer durch die Positionen der in einer Datenbank gespeicherten Codeelemente; oder,
Bestimmen der Codeelementnummer jedes Codeelements in einer Reihenfolge, in der die Codeelemente aus der Datenbank extrahiert werden.

6. Verfahren nach einem der vorhergehenden Ansprüche, wobei das Verfahren vor dem Bestimmen der Vielzahl von Kandidaten-Codeelementen in dem ersten Bild, die dem beliebigen Codeelement in dem zweiten Bild entsprechen, ferner Folgendes umfasst:
Anpassen des ersten Bildes und des zweiten Bildes an eine Ebene in derselben Richtung.

7. Verfahren nach einem der vorhergehenden Ansprüche, wobei das Verfahren nach dem Bestimmen des Ziel-Codeelementsatzes, der jedem Codeelement in dem zweiten Bild entspricht, ferner Folgendes umfasst:
Bestimmen von Mittellinien der Codeelemente in dem ersten Bild und dem zweiten Bild; und
Bestimmen einer Abbildungsbeziehung zwischen den Mittellinien der Codeelemente in dem ersten Bild und dem zweiten Bild entsprechend einer Abbildungsbeziehung zwischen den Ziel-Codeelementen, die allen Codeelementen in dem zweiten Bild entsprechen.

8. Verfahren nach einem der vorhergehenden Ansprüche, wobei das zweite Bild ein Bild ist, das von der Bildaufnahmeeinrichtung aufgenommen wird, nachdem das erste Bild auf die Oberfläche des vermessenen Objekts projiziert und verformt wurde, wobei die Vielzahl von Codeelementen in dem ersten Bild dieselbe Orientierung aufweist und der Abstand zwischen den Codeelementen zufällig bestimmt wird.

9. Verfahren nach einem der vorhergehenden Ansprüche, wobei Merkmalspunkte der Codeelemente mindestens zwei extrahierbare Grauwert-Merkmalspunktmuster umfassen, und wobei die extrahierbaren Grauwert-Merkmale Folgendes umfassen: zwei Endpunkte eines Liniensegments, einen Grafikeckpunkt, einen Schnittpunkt, einen Mittelpunkt.

10. System zur dreidimensionalen Rekonstruktion, umfassend:
eine Bildaufnahmeeinrichtung 603, eine Projektionseinrichtung 604 und einen ersten Prozessor 602, wobei
die Projektionseinrichtung 603 dafür konfiguriert ist, ein erstes Bild auf eine Oberfläche eines vermessenen Objekts 601 zu projizieren;
die Bildaufnahmeeinrichtung 603 dafür konfiguriert ist, ein zweites Bild aufzunehmen, das erhalten wird, nachdem das erste Bild auf die Oberfläche des vermessenen Objekts 601 projiziert wurde; und
der erste Prozessor 602 dafür konfiguriert ist, Codeelemente in dem ersten Bild und dem zweiten Bild einander zuzuordnen, dreidimensionale Koordinaten der Codeelemente in dem zweiten Bild auf Grundlage einer Zuordnungsbeziehung zwischen den Codeelementen in dem ersten Bild und dem zweiten Bild und vorbestimmter dreidimensionaler Koordinaten der Codeelemente in dem ersten Bild zu bestimmen und dreidimensionale Koordinaten des vermessenen Objekts 601 auf Grundlage der dreidimensionalen Koordinaten der Codeelemente in dem ersten Bild und dem zweiten Bild zu bestimmen, um eine dreidimensionale Rekonstruktion des vermessenen Objekts 601 abzuschließen;
**dadurch gekennzeichnet, dass** der erste Prozessor 602 ferner dafür konfiguriert ist:
mindestens ein Codeelement aus einem vorgegebenen Codeelementsatz auszuwählen, wobei das Codeelement in dem vorgegebenen Codeelementsatz mindestens ein Liniensegment mit einer vorgegebenen Länge und zwei Endpunkte umfasst, die dem Liniensegment entsprechen; und
die Vielzahl des mindestens einen Codeelements in der vorgegebenen Richtung und in einem vorgegebenen Abstand zufällig zu verteilen, um das erste Bild zu bilden.

11. System nach Anspruch 10, wobei der erste Prozessor dafür konfiguriert ist:
in dem ersten Bild eine Vielzahl von Kandidaten-Codeelementen zu bestimmen, die einem beliebigen Codeelement in dem zweiten Bild entsprechen, und aus der Vielzahl von Kandidaten-Codeelementen ein Ziel-Codeelement zu bestimmen, das dem beliebigen Codeelement entspricht, um eine Zuordnung zwischen den Codeelementen in dem ersten Bild und den Codeelementen in dem zweiten Bild abzuschließen, wobei Merkmalspunkte des Ziel-Codeelements und Merkmalspunkte der Kandidaten-Codeelemente auf derselben Epipolarlinie liegen.

12. System nach Anspruch 11, wobei der erste Prozessor dafür konfiguriert ist:
einen ersten Nachbarschafts-Codeelementsatz des beliebigen Codeelements in dem zweiten Bild und eine Vielzahl von zweiten Nachbarschafts-Codeelementsätzen der Vielzahl von Kandidaten-Codeelementen zu bestimmen;
die Anzahl übereinstimmender Nachbarschafts-Codeelemente in der Vielzahl von zweiten Nachbarschafts-Codeelementsätzen mit Nachbarschafts-Codeelementen in dem ersten Nachbarschafts-Codeelementsatz zu bestimmen und einen zweiten Nachbarschafts-Codeelementsatz mit der größten Übereinstimmungsanzahl in der Vielzahl von zweiten Nachbarschafts-Codeelementsätzen als Ziel-Zweit-Nachbarschafts-Codeelementsatz zu bestimmen; und
ein Kandidaten-Codeelement, das dem Ziel-Zweit-Nachbarschafts-Codeelementsatz entspricht, als das Ziel-Codeelement zu bestimmen.

13. System nach Anspruch 12, wobei der erste Prozessor dafür konfiguriert ist:
eine Vielzahl von Merkmalspunkten des Ziel-Codeelements zu bestimmen; und
Codeelemente mit den geringsten Abständen auf einer linken Seite und einer rechten Seite der Epipolarlinie, auf der die Vielzahl von Merkmalspunkten liegt, als Nachbarschafts-Codeelemente des Ziel-Codeelements zu bestimmen und die Nachbarschafts-Codeelemente des Ziel-Codeelements zu dem ersten Nachbarschafts-Codeelementsatz zu bilden.

14. System nach Anspruch 12 oder 13, wobei der erste Prozessor dafür konfiguriert ist:
alle Codeelemente in dem ersten Bild und dem zweiten Bild entsprechend den Pixelkoordinaten der Merkmalspunkte der Codeelemente zu nummerieren;
die Nachbarschafts-Codeelemente in dem ersten Nachbarschafts-Codeelementsatz sequenziell mit Nachbarschafts-Codeelementen in entsprechenden Bereichen in der Vielzahl von zweiten Nachbarschafts-Codeelementsätzen zu vergleichen und, unter einer Bedingung, dass Codeelementnummern gleich sind, die Nachbarschafts-Codeelemente als mit den Nachbarschafts-Codeelementen in den entsprechenden Bereichen übereinstimmend zu bestimmen; und
die Anzahl der Übereinstimmung jedes der Vielzahl von zweiten Nachbarschafts-Codeelementsätzen mit den Nachbarschafts-Codeelementen in dem ersten Nachbarschafts-Codeelementsatz zu bestimmen.

## Revendications

1. Procédé mis en œuvre par ordinateur pour une reconstruction tridimensionnelle, comprenant :
la projection d'une première image sur une surface d'un objet mesuré afin d'obtenir une deuxième image, la première image comprenant une pluralité d'éléments de code qui sont distribués de manière aléatoire dans une direction prédéfinie, et les éléments de code étant des bandes de segments de ligne, la deuxième image étant une image acquise par le dispositif d'acquisition d'images après que la première image a été projetée sur la surface de l'objet mesuré (S202) ;
la détermination, dans la première image, d'une pluralité d'éléments de code candidats correspondant à un élément de code quelconque dans la deuxième image, et la détermination, parmi la pluralité d'éléments de code candidats, d'un élément de code cible correspondant à l'élément de code quelconque afin de compléter l'appariement entre les éléments de code dans la première image et les éléments de code dans la deuxième image, des points caractéristiques de l'élément de code cible et des points caractéristiques des éléments de code candidats se trouvant sur une même ligne épipolaire (S204) ; et
la détermination de coordonnées tridimensionnelles des éléments de code dans la deuxième image sur la base d'une relation d'appariement entre les éléments de code dans la première image et la deuxième image et de coordonnées tridimensionnelles prédéterminées des éléments de code dans la première image, et la détermination de coordonnées tridimensionnelles de l'objet mesuré sur la base des coordonnées tridimensionnelles des éléments de code dans la première image et la deuxième image afin de compléter la reconstruction tridimensionnelle de l'objet mesuré (S206) ;
**caractérisé en ce que** le procédé comprend en outre :
la sélection d'au moins un élément de code dans un ensemble d'éléments de code prédéfini, l'élément de code dans l'ensemble d'éléments de code prédéfini comprenant au moins un segment de ligne d'une longueur prédéfinie et deux points d'extrémité correspondant au segment de ligne ; et
la distribution de manière aléatoire de la pluralité de l'au moins un élément de code dans la direction prédéfinie et à une distance prédéfinie afin de former la première image.

2. Procédé selon la revendication 1, dans lequel la détermination, parmi la pluralité d'éléments de code candidats, de l'élément de code cible correspondant à l'élément de code quelconque afin de compléter l'appariement entre les éléments de code dans la première image et les éléments de code dans la deuxième image comprend :
la détermination d'un premier ensemble d'éléments de code de voisinage de l'élément de code quelconque dans la deuxième image et d'une pluralité de deuxièmes ensembles d'éléments de code de voisinage de la pluralité d'éléments de code candidats ;
la détermination du nombre d'éléments de code de voisinage correspondants dans la pluralité de deuxièmes ensembles d'éléments de code de voisinage avec des éléments de code de voisinage dans le premier ensemble d'éléments de code de voisinage, et la détermination d'un deuxième ensemble d'éléments de code de voisinage présentant le plus grand nombre de correspondances dans la pluralité de deuxièmes ensembles d'éléments de code de voisinage en tant qu'ensemble d'éléments de code de voisinage cible ; et
la détermination d'un élément de code candidat correspondant à l'ensemble d'éléments de code de voisinage cible en tant qu'élément de code cible.

3. Procédé selon la revendication 2, dans lequel la détermination du premier ensemble d'éléments de code de voisinage de l'élément de code quelconque dans la deuxième image comprend :
la détermination d'une pluralité de points caractéristiques de l'élément de code quelconque ; et
la détermination d'éléments de code présentant les distances les plus courtes d'un côté gauche et d'un côté droit de la ligne épipolaire sur laquelle se trouvent la pluralité de points caractéristiques en tant qu'éléments de code de voisinage de l'élément de code quelconque, et la formation des éléments de code de voisinage de l'élément de code quelconque en le premier ensemble d'éléments de code de voisinage.

4. Procédé selon la revendication 2 ou 3, dans lequel la détermination du nombre d'éléments de code de voisinage correspondants dans la pluralité de deuxièmes ensembles d'éléments de code de voisinage avec des éléments de code de voisinage dans le premier ensemble d'éléments de code de voisinage comprend :
la numérotation de tous les éléments de code dans la première image et la deuxième image conformément aux coordonnées de pixels des points caractéristiques des éléments de code ;
la comparaison séquentielle des éléments de code de voisinage dans le premier ensemble d'éléments de code de voisinage avec des éléments de code de voisinage dans des zones correspondantes dans la pluralité de deuxièmes ensembles d'éléments de code de voisinage, et, dans une condition selon laquelle des numéros d'éléments de code sont identiques, la détermination que les éléments de code de voisinage correspondent aux éléments de code de voisinage dans les zones correspondantes ; et
la détermination du nombre de correspondances de chacun de la pluralité de deuxièmes ensembles d'éléments de code de voisinage avec les éléments de code de voisinage dans le premier ensemble d'éléments de code de voisinage.

5. Procédé selon la revendication 4, dans lequel l'élément de code correspond au numéro d'élément de code un à un ; le procédé comprend en outre :
la détermination du numéro d'élément de code par les positions des éléments de code stockés dans une base de données ; ou,
la détermination du numéro d'élément de code de chaque élément de code dans un ordre dans lequel les éléments de code sont extraits de la base de données.

6. Procédé selon l'une quelconque des revendications précédentes, dans lequel, préalablement à la détermination, dans la première image, de la pluralité d'éléments de code candidats
l'ajustement de la première image et de la deuxième image à un plan dans une même direction.

7. Procédé selon l'une quelconque des revendications précédentes, dans lequel, après la détermination de l'ensemble d'éléments de code cible correspondant à chaque élément de code dans la deuxième image, le procédé comprend en outre :
la détermination de lignes centrales des éléments de code dans la première image et la deuxième image ; et
la détermination d'une relation de mise en correspondance entre les lignes centrales des éléments de code dans la première image et la deuxième image conformément à une relation de mise en correspondance entre les éléments de code cibles correspondant à tous les éléments de code dans la deuxième image.

8. Procédé selon l'une quelconque des revendications précédentes, dans lequel la deuxième image est une image acquise par le dispositif d'acquisition d'images après que la première image a été projetée sur la surface de l'objet mesuré et déformée, la pluralité d'éléments de code dans la première image présentant la même orientation, et l'espacement entre les éléments de code étant déterminé de manière aléatoire.

9. Procédé selon l'une quelconque des revendications précédentes, dans lequel des points caractéristiques des éléments de code comprennent au moins deux motifs de points caractéristiques de niveaux de gris extractibles, et les caractéristiques de niveaux de gris extractibles comprennent l'une quelconque des suivantes : deux points d'extrémité d'un segment de ligne, un point d'angle graphique, un point d'intersection, un point central.

10. Système pour une reconstruction tridimensionnelle, comprenant :
un dispositif d'acquisition d'images 603, un dispositif de projection 604 et un premier processeur 602, dans lequel
le dispositif de projection 603 est configuré pour projeter une première image sur une surface d'un objet mesuré 601 ;
le dispositif d'acquisition d'images 603 est configuré pour acquérir une deuxième image obtenue après que la première image a été projetée sur la surface de l'objet mesuré 601 ; et
le premier processeur 602 est configuré pour apparier des éléments de code dans la première image et la deuxième image, déterminer des coordonnées tridimensionnelles des éléments de code dans la deuxième image sur la base d'une relation d'appariement entre les éléments de code dans la première image et la deuxième image et de coordonnées tridimensionnelles prédéterminées des éléments de code dans la première image, et déterminer des coordonnées tridimensionnelles de l'objet mesuré 601 sur la base des coordonnées tridimensionnelles des éléments de code dans la première image et la deuxième image afin de compléter la reconstruction tridimensionnelle de l'objet mesuré 601 ;
**caractérisé en ce que** le premier processeur 602 est en outre configuré pour :
sélectionner au moins un élément de code dans un ensemble d'éléments de code prédéfini, l'élément de code dans l'ensemble d'éléments de code prédéfini comprenant au moins un segment de ligne d'une longueur prédéfinie et deux points d'extrémité correspondant au segment de ligne ; et
distribuer de manière aléatoire la pluralité de l'au moins un élément de code dans la direction prédéfinie et à une distance prédéfinie afin de former la première image.

11. Système selon la revendication 10, dans lequel le premier processeur est configuré pour :
déterminer, dans la première image, une pluralité d'éléments de code candidats correspondant à un élément de code quelconque dans la deuxième image, et déterminer, parmi la pluralité d'éléments de code candidats, un élément de code cible correspondant à l'élément de code quelconque afin de compléter l'appariement entre les éléments de code dans la première image et les éléments de code dans la deuxième image, des points caractéristiques de l'élément de code cible et des points caractéristiques des éléments de code candidats se trouvant sur une même ligne épipolaire.

12. Système selon la revendication 11, dans lequel le premier processeur est configuré pour :
déterminer un premier ensemble d'éléments de code de voisinage de l'élément de code quelconque dans la deuxième image et une pluralité de deuxièmes ensembles d'éléments de code de voisinage de la pluralité d'éléments de code candidats ;
déterminer le nombre d'éléments de code de voisinage correspondants dans la pluralité de deuxièmes ensembles d'éléments de code de voisinage avec des éléments de code de voisinage dans le premier ensemble d'éléments de code de voisinage, et déterminer un deuxième ensemble d'éléments de code de voisinage présentant le plus grand nombre de correspondances dans la pluralité de deuxièmes ensembles d'éléments de code de voisinage en tant qu'ensemble d'éléments de code de voisinage cible ; et
déterminer un élément de code candidat correspondant à l'ensemble d'éléments de code de voisinage cible en tant qu'élément de code cible.

13. Système selon la revendication 12, dans lequel le premier processeur est configuré pour :
déterminer une pluralité de points caractéristiques de l'élément de code cible ; et
déterminer des éléments de code présentant les distances les plus courtes d'un côté gauche et d'un côté droit de la ligne épipolaire sur laquelle se trouvent la pluralité de points caractéristiques en tant qu'éléments de code de voisinage de l'élément de code cible, et former les éléments de code de voisinage de l'élément de code cible en le premier ensemble d'éléments de code de voisinage.

14. Système selon la revendication 12 ou 13, dans lequel le premier processeur est configuré pour :
numéroter tous les éléments de code dans la première image et la deuxième image conformément aux coordonnées de pixels des points caractéristiques des éléments de code ;
comparer séquentiellement les éléments de code de voisinage dans le premier ensemble d'éléments de code de voisinage avec des éléments de code de voisinage dans des zones correspondantes dans la pluralité de deuxièmes ensembles d'éléments de code de voisinage et, dans une condition selon laquelle des numéros d'éléments de code sont identiques, déterminer que les éléments de code de voisinage correspondent aux éléments de code de voisinage dans les zones correspondantes ; et
déterminer le nombre de correspondances de chacun de la pluralité de deuxièmes ensembles d'éléments de code de voisinage avec les éléments de code de voisinage dans le premier ensemble d'éléments de code de voisinage.
